# EUROPEAN PATENT APPLICATION

(11) **EP 3 587 914 A1**
(43) Date of publication of application: **01.01.2020**
(21) Application number: 18382475.4
(22) Date of filing: 26.06.2018
(51) Int. Cl.: F21V 8/00, F21S 43/239

(54) **LIGHTING DEVICE AND METHOD FOR MANUFACTURING SAID LIGHTING DEVICE**

(71) Applicant: Ficomirrors, S.A.U., 08028 Barcelona (ES)
(72) Inventor: RUIZ ORTEGA, Néstor, 08232 Viladecavalls (Barcelona) (ES); MADORRÁN TIL, Gonzalo, 08232 Viladecavalls (Barcelona) (ES)
(74) Representative: Herrero & Asociados, S.L.

(57) **Abstract**

The lighting device (1) comprises a light guide (2) comprising two or more layers (21, 22, 25); and a light source (3) that illuminates said light guide (2), wherein said two or more layers (21, 22, 25) define at least one surface (23, 26) between two adjacent layers (21, 22, 25), geometric motives (24) being formed in said at least one surface (23, 26).

The method for manufacturing said lighting device comprises the following steps: providing one layer (21); forming geometric motives (24) in said one layer (21); providing another layer (22) injected directly to the geometric motives (24) defining a surface (23) between said layers (21, 22).

It provides a better homogenous illuminance and a better photometric performance.

## Description

The present invention refers to a lighting device, specially designed to be used in vehicles for providing a different optical styles or functional effects.

The present invention also refers to a method for manufacturing said lighting device.

### Background of the invention

Lighting devices for vehicle lighting units comprising light guides are known in the art. Lighting devices comprising such light guides enhance the vehicle from an aesthetic point of view while fulfilling safety functions.

In these light guides the geometric motives used for optical or style reasons usually are only located in the external area of the light guide, usually in the back side.

This kind of lighting devices have some drawbacks, such as:
- The depth of the geometric motives is limited because if it increases the light guide thickness is also increased and the possibility of being able to leave internal defects also increase, decreasing the photometric efficiency with a reduced visual style appearance;
- The style appearance is worse because there is less flexibility in the geometric shapes (limited height or depth of the geometric motives), so that a more uniform shape is needed.
- More difficult to reach photometric values required by regulations due to light losses during light conduction through the light guide, so that a greater number of light sources or light sources with more intensity could be necessary.
- No possibility of creating 3D visual effects.

An example of a lighting device comprising a light guide is disclosed in US2017/0097135 A1. This document discloses a motor vehicle lamp comprising a light conducting element formed by upper and lower light coupling parts and an optically active surface embedded between both coupling parts.

The optically active band shape is made of a flat material embedded with its longitudinal extension direction along the direction of the light and it is completely surrounded by the upper and lower light conducting bodies and said flat material embedded has to have a different refraction index from of the light conductive element.

The advantage of such an optic part is that light interacts with the flat material due to the different of refraction index can be seen by the naked eye.

However, this light guide presents the following problems:
The need to add a flat material with the geometric motives, further the light guide.

The flat material has a different refraction index from the light guide, therefore the need to use a different material.

The sections between layers with different direction than the light inside the light guide, are most transmitting efficient, and flat sections are not the most transmitting efficient shape.

Therefore, one purpose of the present invention is to provide a lighting device comprising geometric motives providing a better homogenous illuminance and a better photometric performance.

### Description of the invention

With the lighting device according to the present invention it is possible to solve said drawbacks, providing other advantages that are described below.

The lighting device according to the present invention comprises a light guide comprising two or more layers; and a light source that illuminates said light guide, characterized in that said two or more layers define at least one surface between two adjacent layers, geometric motives being formed in said at least one surface.

Advantageously, said geometric motives are geometric shapes formed in said at least one surface, and according to a preferred embodiment said geometric motives are recesses and protrusions made in said at least one surface.

Preferably, said geometric motives have a depth or height from 0.4 mm to 15 mm, such as between 0.8 and 12 mm, and optimally between 1 and 10 mm.

The two or more layers are applied individually by injection, injecting one over the other.

The injecting parts can be of the same or different materials but at least one of the parts must be transparent or semi-transparent (milky, smoked, etc). If the materials are different, further visual effects due to the different refraction and reflective properties are possible. Examples of materials suitable for the invention are polymethyl methacrylate (PMMA), polycarbonate (PC) and polyamide (PA) for at least one of the injection phases and for the other injection phase has to be the same material or a material which could be combinable with the first material phase.

Preferably, said two or more layers are transparent, or they can be colored with any suitable color.

For example, said geometric motives can be made by engraving or graining after the injection of the first layer or during the own injection process itself of that first layer, or by any suitable method in that first layer. The second layer is injected directly over the geometric motives made on the first layer.
According to a possible embodiment, said light guide can be covered by an external lens, and said light guide and said light source can be housed in a housing.

In the invention, as the motives are created with protrusions and these motives have directions different to the direction of the light inside the light guide, the efficiency of light transmission is enhanced.

On the other hand, in a system with a layer injected perfectly over another injected layer with the same material, same refractive indexes, the second injection does not leave any air bubble between injected labels so there is no change in the refractive index between materials and no motive is be seen. For that reason, it is necessary to obtain imperfections between both injections through a texturization of the surface of the motive, so that the second material cannot perfectly copy its roughness and thus have some air bubbles between both surfaces. The air bubbles acts as a second material with different refractive index.

The creation of that texturization could be also used with layers of different refraction index. The texturization enhances the lighting effect of the light guide.

The range of textures in the surface of the motive should be greater than 5 µm and optimally greater than 10 µm, since in this way the roughness is not copied by the other injection, and in the largest case, we have a maximum range of less than 400 µm, a maximum range of less than 300 µm and an optimum range of less than 200 µm.

A possible optimization of the embodiment is forming in one external layer, geometric motives that will not be over-injected by another layer, thus, optimizing the quantity of material used to manufacture the light guide.
According to a second aspect, the present invention also refers to a method for manufacturing a lighting device as described previously, the method comprising the following steps:
- providing one layer;
- forming geometric motives in at least one surface of one layer;
- providing another layer injected directly to the geometric motives formed in said one layer defining a surface between said layers.

The method can also comprise forming second geometric motives in the other layer than the surface between said layers of the another layer, an additional layer injected directly to said second geometric motives and defining an additional surface between the additional layer and one of the other two layers.

Furthermore, the step of providing one layer and forming the geometric motives can be carried out during the injecting step.

Preferably, said layers are provided by injection, and said geometric motives are formed during the same injection or by engraving or graining.

With the lighting device according to the present invention at least the following advantages are obtained:
- Better homogenous illuminance;
- Better photometric performance;
- The creation of one light conductive element, without the necessity to add an embedded material;
- More flexibility in geometrical shapes and optic effects;
- High depth of geometric motives are allowed, so that a 3D visual effect is obtained;
- More quantity of motives is allowed and diversity concerning the type is obtained (complicated shapes, graining treatments, etc.).

### Brief description of the drawings

For a better understanding the above explanation and for the sole purpose of providing an example, some non-limiting drawings are included that schematically depict a practical embodiment.
Figure 1 is a cross-section view of the lighting device of the present invention, according to a first embodiment;
Figure 2 is a cross-section view of the lighting device of the present invention, according to a second embodiment;
Figure 3 is a frontal view of a geometric motive within the lighting device of the present invention, according to an example;
Figure 4 is a section view along line IV-IV shown in Figure 3;
Figure 5 is a cross-section view where the first injection phase of the first layer of the lighting device of the present invention is shown;
Figure 6 is a cross-section view where the second injection phase of the second layer of the lighting device of the present invention is shown; and
Figure 7 is a cross-section of an example of the lighting device of the present invention, where both layers have geometric motives.

### Description of preferred embodiments

The present invention relates to a lighting device, generally identified by reference numeral 1, comprising a light guide 2 and a light source 3, said light source 3 illuminating said light guide 2. Both the light guide 2 and the light source 3 can be housed in a housing 4 and an external lens 5 can cover said light guide 2.

The light source 3 can be any suitable light source, such a LED or combination of LEDs, or the like.

The lighting device 1 according to the present invention is especially designed to be used in a vehicle. However, it is evident that it can be used in other applications.

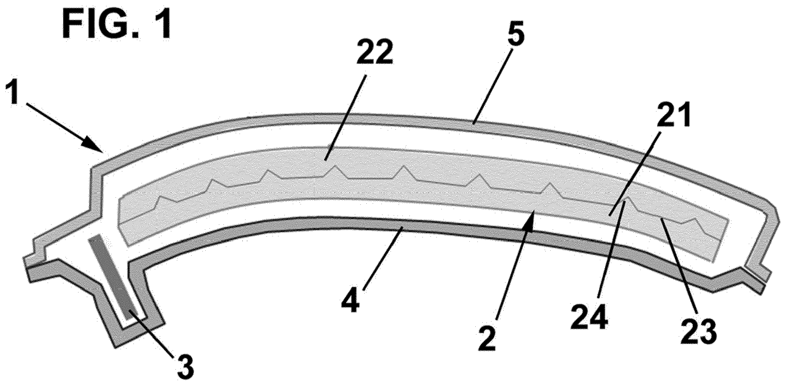

According to a first embodiment, shown in Figure 1, the light guide 2 is formed by two layers 21, 22 defining between them a surface 23, i.e. the common surface in contact between both layers 21, 22.

A plurality of geometric motives 24 are formed in said surface 23 for providing an optical effect when the light source 3 emits light and illuminates the light guide 2.

Said geometric motives 24 are geometric shapes (such as stripes or any suitable shape) formed in said surface 23. For example, and as shown in Fig. 1, said geometric motives 24 are recesses and protrusions made in said surface 23.

Just as an example, said geometric motives 24 have a depth or height from 0,4mm to 15 mm.

These geometric motives 24 can be made to the first layer, for example, during the same injection process or by engraving or graining, or by any suitable method, defining any texture or effect.

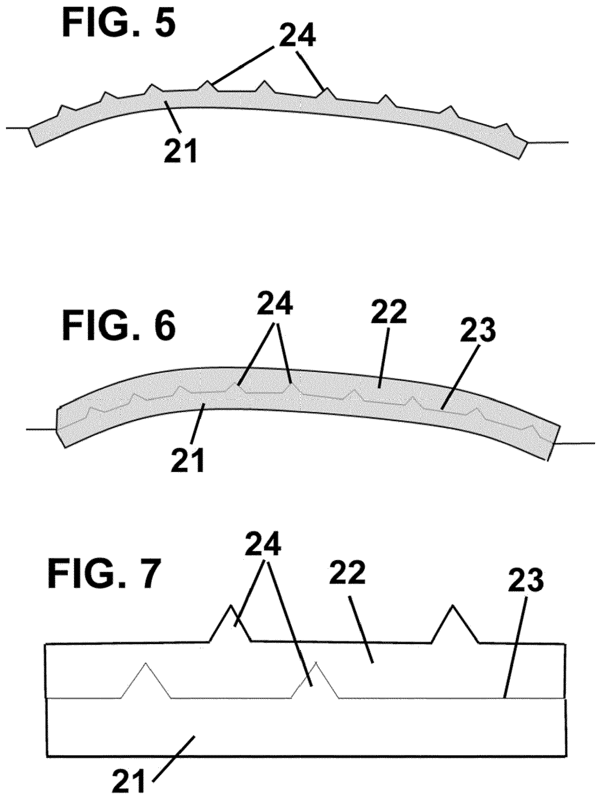

The light guide 2 is made by injection. For example, first injecting the first layer 21 with the geometric motives 24 (figure 5) and then the geometric motives in the first layer 21 are filled with the second layer 22, which is also injected (figure 6).

The light guide 2 is preferably transparent or colored with any suitable color, and it is usually made from any suitable plastic material. Each layer 21, 22 could be made with the same material or with different material.

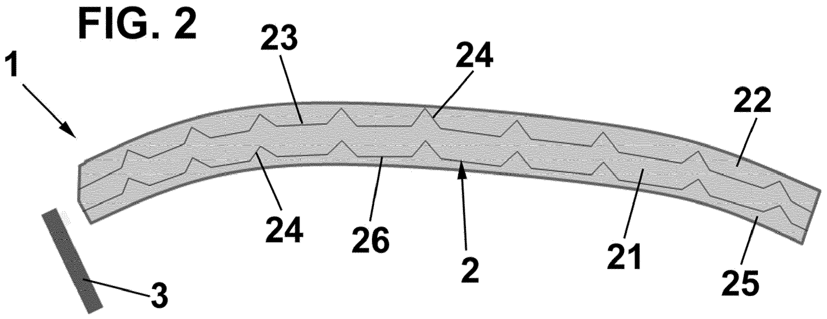

Figure 2 shows a second embodiment of the lighting device according to the present invention. For simplicity reason the same elements from the first embodiment are identified by the same numeral references and they are not further described.

The main difference in this second embodiment with respect the first embodiment is that the light guide 2 is made from three layers 21, 22, 25, defining two surfaces 23, 26 between two adjacent layers 21, 22 and 22, 25, respectively.

In this embodiment, the geometric motives 24 are formed in both surfaces 23, 26. However, it must be pointed out that the geometric motives 24 could be formed only in one of the surfaces 23, 26.

In this case, the layers 21, 22, 25 are also sequentially injected, as described previously with respect to the first embodiment.

With the lighting device according to the present invention a 3D optical effect can be obtained by the geometric motives 24 formed directly in the surface(s) 23, 26 in contact between adjacent layers 21, 22, 25.

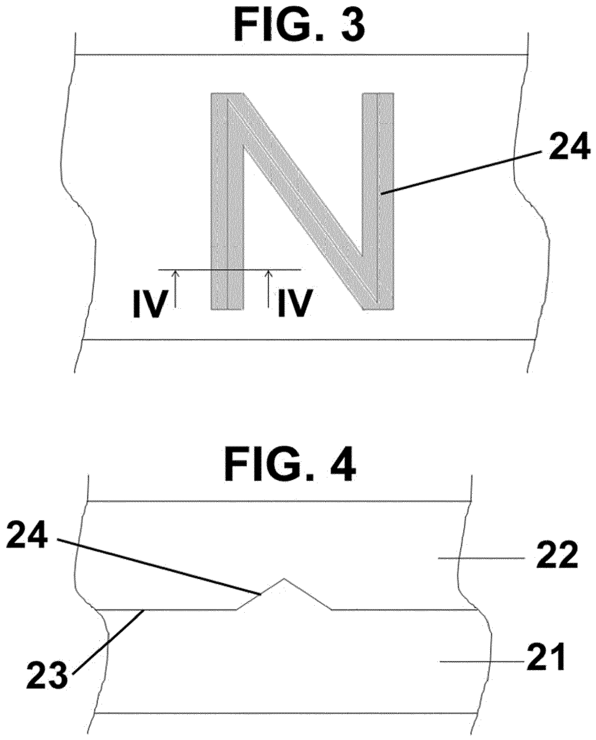

In Figures 3 and 4 an example of the lighting device according to the present invention is shown. According to this example, the geometric motives 24 form a letter "N". In this example, the letter "N" has a height of 2 mm and a thickness of 6 mm.

Finally, figure 7 is a cross-section of another example of the lighting device of the present invention, where both layers have geometric motives.

Even though reference has been made to a specific embodiment of the invention, it is obvious for a person skilled in the art that the lighting device described herein is susceptible to numerous variations and modifications, and that all of the details mentioned can be substituted for other technically equivalent ones without departing from the scope of protection defined by the attached claims.

## Claims

1. Lighting device (1) comprising:
- a light guide (2) comprising two or more layers (21, 22, 25); and
- a light source (3) that illuminates said light guide (2),
**characterized in that** said two or more layers (21, 22, 25) define at least one surface (23, 26) between two adjacent layers (21, 22, 25), geometric motives (24) being formed in said at least one surface (23, 26).

2. Lighting device (1) according to claim 1, wherein said geometric motives (24) are geometric shapes formed in said at least one surface (23, 26).

3. Lighting device (1) according to claim 1 or 2, wherein said geometric motives (24) are recesses and protrusions made in said at least one surface (23, 26).

4. Lighting device (1) according to anyone of the previous claims, wherein said geometric motives (24) have a depth or height from 0,4 to 15 mm.

5. Lighting device (1) according to claim 1, wherein said two or more layers (21, 22, 25) are applied individually by injection.

6. Lighting device (1) according to claim 1, wherein said two or more layers (21, 22, 25) are transparent.

7. Lighting device (1) according to claim 1, wherein said geometric motives (24) are made by engraving, graining or directly during the injection.

8. Lighting device (1) according to claim 1, wherein said light guide (2) is covered by an external lens (5).

9. Lighting device (1) according to claim 1, wherein said light guide (2) and said light source (3) are housed in a housing (4).

10. Lighting device (1) according to claim 1, wherein the geometric motives (24) have a texturized surface.

11. Method for manufacturing a lighting device (1) according to anyone of the previous claims, **characterized in that** the method comprises the following steps:
- providing one layer (21);
- forming geometric motives (24) in said one layer (21);
- providing another layer (22) injected directly to the geometric motives (24) defining a surface (23) between said layers (21, 22).

12. Method according to claim 11, wherein it also comprises forming second geometric motives (24) in said another layer (22), injecting an additional layer (25) directly to said second geometric motives (24), defining an additional surface between the additional layer (25) and said another layer (22).

13. Method according to claim 11 or 12, wherein said geometric motives (24) are formed by engraving, graining or molding.

14. Method according to anyone of claims 11-13, wherein a surface of said geometric motives (24) is texturized.
